# EUROPÄISCHE PATENTSCHRIFT

(11) **EP 3 105 386 B1**
(45) Veröffentlichungstag und Bekanntmachung des Hinweises auf die Patenterteilung: **05.06.2019**
(21) Anmeldenummer: 15715159.8
(22) Anmeldetag: 10.02.2015
(51) Int. Cl.: E04B 1/62, E04B 1/76, E04D 12/00, B32B 27/12, B32B 27/30, B32B 27/34, B32B 27/40, C08J 5/18, D06N 3/14, D06N 3/00, E04F 13/08, E04B 1/64, E04D 1/28

(54) **GEDÄMMTE GEBÄUDEKONSTRUKTION**
INSULATED CONSTRUCTION
CONSTRUCTION ISOLÉE

(30) Priorität: 13.02.2014 DE 102014001874; 16.06.2014 DE 102014008531
(43) Veröffentlichungstag der Anmeldung: 21.12.2016
(73) Patentinhaber: Ewald Dörken AG, 58313 Herdecke (DE)
(72) Erfinder: RAIDT, Heinz-Peter, 44227 Dortmund (DE); SCHWAAB, Gilles, 44227 Dortmund (DE); HÖFER, Nicole, 58456 Witten (DE); SCHRÖER, Jörn, 58313 Herdecke (DE)
(74) Vertreter: Von Rohr Patentanwälte Partnerschaft mbB
(86) Internationale Anmeldenummer: PCT/EP2015/000280
(87) Internationale Veröffentlichungsnummer: WO 2015/120974

(56) Entgegenhaltungen:
- EP-A1- 2 692 959
- WO-A1-02/070251
- WO-A2-2006/002440
- DE-A1-102006 009 260
- DE-A1-102010 054 110
- DE-U1- 29 700 987
- FR-A1- 2 987 380
- FR-A1- 2 997 649
- US-A1- 2007 015 424
- US-A1- 2009 202 852
- US-A1- 2011 197 530

## Beschreibung

Die vorliegende Erfindung betrifft eine gedämmte Gebäudekonstruktion, insbesondere eine gedämmte Dach- und/oder Wandkonstruktion eines Gebäudes, aufweisend wenigstens eine Wärmedämmschicht, beispielsweise aus Glas- oder Steinwolle, gemäß dem Oberbegriff von Patentanspruch 1.

Um Energieverluste über Dächer und Wände zu reduzieren, werden seit langem Dämmstoffe in den Zwischenräumen im Tragwerk angebracht. Häufig handelt es sich bei den Dämmstoffen um diffusionsoffene Mineral- oder Naturfasermatten. Schon früh wurde erkannt, dass an der Grenzfläche der gedämmten Konstruktion, die zum Innenraum gerichtet ist, eine Schutzschicht angebracht werden muss. Gründe dafür sind Wasserdampf-Transportvorgänge, die unter anderem von Dampfdruckunterschieden zwischen Raumlauft und Außenluft ausgelöst werden. Wird dieser Transportstrom nicht gebremst, so besteht in der kalten Jahreszeit das Risiko von Kondenswasserbildung im Inneren der Dach- und/oder Wandkonstruktion. Kondenswasser kann immer dann entstehen, wenn ein ungebremster Diffusions- oder Konvektionsstrom an kalte Bauteilschichten stößt, da Luft mit abnehmender Temperatur immer weniger Wasser aufnehmen kann. Im ungünstigsten Fall kann es zu einer Übersättigung der im Bauteilquerschnitt befindlichen Luft kommen, so dass erhebliche Mengen an überschüssigem Wasser als Kondenswasser ausgeschieden werden.

In Mittel- und Nordeuropa besteht das Kondenswasserrisiko hauptsächlich im Winter, bei hohem Dampfdruck in Innenräumen und geringem Dampfdruck in der Außenluft. Daher versucht man, den Diffusionsstrom an der Rauminnenseite, also der warmen Seite der Konstruktion, zu sperren, um der feuchten Luft den Zugang zur Konstruktion, welche in Form von Sparren oder Tragwerken sicherheitsrelevante Funktion hat, zu versperren.

Aus dem Stand der Technik sind als "Dampfsperren" bezeichnete bituminöse Papiere und aluminiumbeschichtete Papiere bekannt. Heute werden überwiegend Kunststofffolien eingesetzt.

Bei aus dem Stand der Technik bekannten diffusionshemmenden Folien erreicht der Diffusionswiderstand S_{d}-Werte von ca. 2 m bis 150 m, bei Aluminiumfolien sogar bis > 1500 m, was bauphysikalisch der Dampfdichtheit entspricht. Je höher der S_{d}-Wert ist, desto größer ist der Diffusionswiderstand. Am weitesten verbreitet sind allerdings Folien mit S_{d}-Werten um 100 m.

Neben Folien werden auch OSB-Platten oder Gipskarton-Platten als Luftdichtheits-Schichten und diffusionshemmende Schichten rauminnenseitig verwendet. Deren S_{d}-Werte sind allerdings sehr klein, so dass sie dem Diffusionsstrom oftmals nicht ausreichend Widerstand entgegensetzen können.

Rauminnenseitig werden im mitteleuropäischen Raum diffusionshemmende Materialien verwendet und außen eher diffusionsoffene Materialien, um Feuchte, die sich im Bauteilquerschnitt befinden kann, nach außen entweichen zu lassen.

Alle bisher aufgeführten Materialien haben einen weitgehend konstanten S_{d}-Wert, der lediglich von der Wasserdampfdiffusions-Widerstandszahl als Kennwert des Materials und von der Schichtdicke des Materials abhängt. Die wasserdampfdiffusionsäquivalente Luftschichtdicke wird hierbei von den Umgebungsbedingungen, wie Temperatur oder Luftfeuchte, wenig beeinflusst.

Aus dem Stand der Technik sind weiter Dampfbremsen bekannt, deren Widerstand gegen Wasserdampfdiffusion vom Feuchtegehalt der Umgebungsluft abhängt. Vorteil solcher Dampfbremsen ist, dass sie eine beschleunigte Austrocknung einer Konstruktion zulassen, sofern Wasser in die Konstruktion gedrungen ist, da sie bei hohen Feuchtegehalten stärker diffusionsoffen sind und somit das Entweichen von Feuchte möglich ist. Bei geringen Feuchtegehalten der Luft, beispielsweise im Winter, wenn ein Wasserdampf-Diffusionsstrom von innen nach außen gerichtet ist, weisen diese Dampfbremsen höhere S_{d}-Werte auf und hemmen die Wasserdampfdiffusion.

Eine feuchtevariable Folie, deren Widerstand gegen Wasserdampfdiffusion feuchteabhängig ist, ist beispielsweise in dem Dokument WO 96/33321 A1 beschrieben. Die S_{d}-Werte der bekannten Folie variieren von 2 m bis 5 m bei 30 % bis 50% relativer Luftfeuchtigkeit bis zu < 1 m bei 60 % bis 80 % relativer Luftfeuchtigkeit. Die beschriebene Folie ist für eine Verwendung im mittel- und nordeuropäischen Klima an der Rauminnenseite ausgelegt.

In Klimazonen mit warmen Wintern und feuchtheißen Sommern kehrt sich der Diffusionsstrom allerdings um. Dort herrschen in der Außenluft höhere Dampfdrücke als in Innenräumen, was insbesondere dann gilt, wenn innen die Luft klimatisiert wird. Auch hier besteht das Risiko einer Kondenswasserbildung. Daher werden bei feuchtheißem Klima diffusionshemmende Schichten an der Außenfläche einer gedämmten Gebäudekonstruktion angebracht. Besonders kritisch sind hier solche Klimate, die sowohl feuchtheiße Sommer als auch kalte Winter haben und beispielsweise in Höhenlagen verschiedener tropischer und subtropischer Länder vorhanden sind. Hier ist es erforderlich, an das örtliche Klima angepasste Kombinationen von Schutzschichten, wie beispielsweise Dampfbremsen mit Dach- und/oder Fassadenbahnen, einzusetzen.

Werden Schutzschichten, die für die Verwendung in klimatischen Bedingungen im gemäßigten Klima ausgelegt sind, in anderen Klimaregionen eingesetzt, kann es zu schädlichem Tauwasserausfall und schlimmstenfalls zum Versagen der Konstruktion kommen. Um dies zu verhindern, müssen in der Praxis außen und innen unterschiedliche und an die klimatischen Gegebenheiten angepasste Schutzschichten verwendet werden. Werden falsche oder keine Schutzschichten vorgesehen, kann dies dazu beitragen, dass die Lebensdauer des Gebäudes sinkt und der Energieverbrauch steigt. Hierauf wird nachfolgend eingegangen.

Hygrothermische Simulationen können zur Beurteilung der Feuchtesicherheit von gedämmten Baukonstruktionen dienen und lassen sich beispielsweise mit Hilfe des am Fraunhofer Institut für Bauphysik entwickelten Verfahrens zur Berechnung des instationären Wärme- und Feuchtetransports in Bauteilen WUFI® 5.2 durchführen. Das Programm WUFI® 5.2 bietet die Möglichkeit, u.a. unterschiedliche Klimate, Materialdaten, Ausrichtungen von Gebäuden und weiteres auszuwählen und gezielt festzulegen.

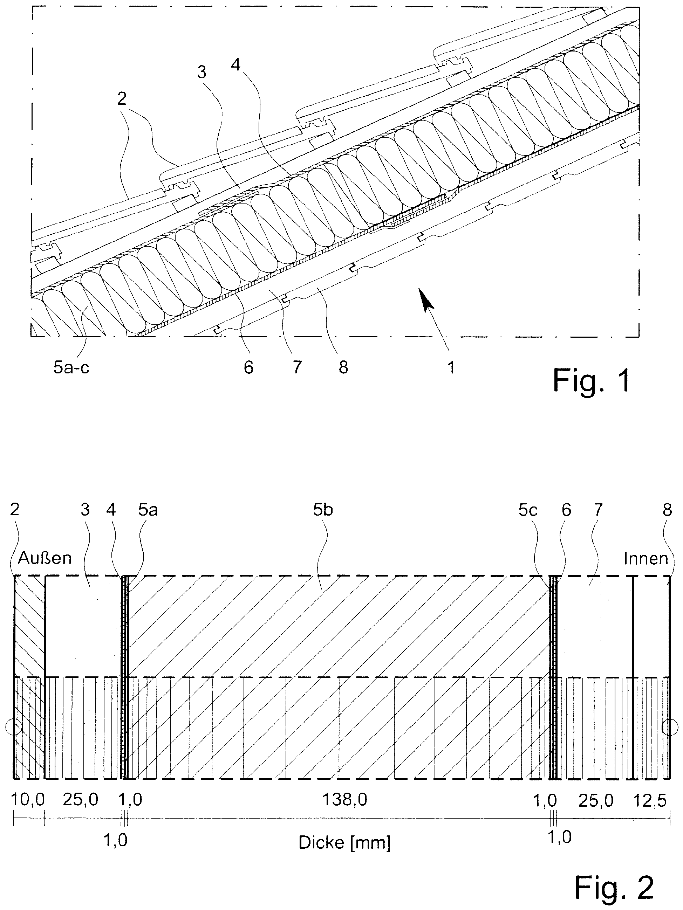

Eine typische Steildachkonstruktion 1 ist in Fig. 1 schematisch gezeigt und weist den nachfolgend wiedergegebenen Aufbau beginnend an der äußeren Dachhaut auf:

| **Schicht/Material (von außen nach innen)** | **Dicke [m]** |
|---|---|
| Dachziegel (2) | 0,01 |
| Luftschicht (3) | 0,025 |
| Schutzschicht außen (4) | 0,001 |
| Glaswolleschichten (5a - c) | 0,140 |
| Schutzschicht innen (6) | 0,001 |
| Luftschicht (7) | 0,025 |
| Gipskartonplatte (8) | 0,0125 |

Fig. 2 zeigt schematisch den oben beschriebenen Schichtaufbau der Dachkonstruktion 1. Nachfolgend wird auf Figur 2 Bezug genommen.

Mit dem Programm WUFI® 5.2 pro wurden für die Steildachkonstruktion 1 hygrothermische Simulationen erstellt und es wurde die Feuchtesicherheit der Steildachkonstruktion bewertet. Die Komplexität der mit diesem Simulationsprogramm erreichbaren Ergebnisse machte es notwendig, für den jeweiligen Anwendungsfall spezielle Auswertekriterien zu definieren. Im Rahmen der Erfindung wurde der Feuchtegehalt der Wärmedämmung, angrenzend an eine nichtsaugende Grenzfläche bzw. Schutzschicht, wie Dampfbremse oder Dachbahn, als entscheidender Faktor berücksichtigt. Dazu wurde der Dämmstoff Glaswolle (Glaswolleschichten 5a - 5c) mit einer Gesamtstärke der Dämmung von 140 mm rechnerisch geteilt und es wurden sehr dünne Schichten von 1 mm an den Grenzflächen zu den Dampfbremsen 4, 6 gesondert betrachtet.

Ausgehend von der Voraussetzung, dass der S_{d}-Wert der Schutzschicht 4 (außen) 0,10 m und der S_{d}-Wert der Schutzschicht 6 (innen) 20 m beträgt, wurde für die Klimaregion "Holzkirchen/Deutschland" bei konstanten, ungünstigen Randbedingungen (Orientierung: Nord; Neigung: 38°; Außenoberfläche Dach; Strahlungsabsorption von Dachziegel rot; Wärmewiderstand innen: Dach; Anfangsbedingungen: 0,8 % relative Ausgangsfeuchte, über das Bauteil gemittelt; Zeitraum vom 1. August 2009 bis 1. August 2013; zwei Stunden Rechenzeitschritte, (verringert bei Konvergenzproblemen) in den durchgeführten Simulationsrechnungen an der inneren Glaswolleschicht 5c eine Feuchtemenge von maximal 8 g/m² und an der äußeren Glaswolleschicht 5a eine maximale Feuchtemenge von 16 g/m² ermittelt. Zu dem DIN-Norm-konformen Aufbau der Steildachkonstruktion 1 existieren praktische Erfahrungen, die für die vorgenannten Feuchtemengen eine Schadensfreiheit belegen und somit die Bewertung untermauern, dass diese maximalen Feuchtegehalte unschädlich sind. Werden Schutzschichten mit diesen S_{d}-Wert-Kombinationen, die für die klimatischen Bedingungen im gemäßigten Klima sehr gut geeignet sind, allerdings in anderen Klimaregionen eingesetzt, kann es zu schädlichem Tauwasserausfall und schlimmstenfalls zum Versagen der Konstruktion führen. Wird beispielsweise bei Tauwasser-Simulationen von der Klimaregion "Miami/USA" (außen sehr warm und feucht) ausgegangen, ergibt sich bei gleichem Aufbau der Steildachkonstruktion 1 eine maximale Feuchtemenge an der inneren Glaswolleschicht 5c von 565 g/m² und an der äußeren Glaswolleschicht 5a eine maximale Feuchtemenge von 11 g/m², was bauphysikalisch nach DIN 4108 als schädlich zu bewerten ist. Werden allerdings die äußere Schutzschicht 4 und die innere Schutzschicht 6 miteinander vertauscht, ergeben sich für die Klimaregion "Miami/USA" unbedenkliche maximale Feuchtegehalte in den Glaswolleschichten 5a, 5c von innen 5 g/m² und außen 4 g/m².

Diesem Umstand wird bislang in der Baupraxis dergestalt Rechnung getragen, dass jeweils außen und innen andere, den Gegebenheiten angepasste Dampfbremsen verwendet werden müssen. Werden falsch ausgelegte bzw. keine Dampfbremsen eingesetzt, trägt dies dazu bei, dass die Lebensdauer des Gebäudes sinkt und ein hoher Energieverbrauch zu erwarten ist.

Werden dagegen feuchtevariable Dampfbremsen in der bisher betrachteten Steildachkonstruktion 1 verwendet, so lassen sich durch hygrothermische Simulationen wie oben beschrieben folgende Feuchtewerte in den Grenzschichten zu den Schutzschichten 4, 6 ermitteln:

| Klimaregion | Sd-Wert [m] Schutzschicht 6 (innen) | Sd-Wert [m] Schutzschicht 4 (außen) | Wassermenge Glaswolleschicht 5c (innen) in [g/m²] | Wassermenge Glaswolleschicht 5a (außen) in [g/m²] |
|---|---|---|---|---|
| Holzkirchen | variabel | 0,1 | 5 | 25 |
| Holzkirchen | 20 | variabel | 8 | 20 |
| Holzkirchen | 0,1 | variabel | 2 | 762 |
| Miami | variabel | 0,1 | 15 | 7 |
| Miami | 20 | variabel | 288 | 23 |
| Miami | 0,1 | variabel | 4 | 5 |

Bei Verwendung einer Schutzschicht 6 (innen) mit einem variablen S_{d}-Wert und einer Schutzschicht 4 (außen) mit einem S_{d}-Wert von 0,1 m kommt es für die Klimaregion "Holzkirchen/Deutschland" zu leicht erhöhten, aber unbedenklichen Feuchtegehalten in der äußeren Glaswolleschicht 5a, die an die äußere Schutzschicht 4 als Witterungsschutzbahn angrenzt. Die Verwendung derselben Schutzschicht 4, 6 liefert für die Klimaregion "Miami/USA" an der Innenseite erhöhte, aber unbedenkliche Feuchtegehalte. Bei Verwendung einer Schutzschicht 6 (innen) mit einem S_{d}-Wert von 20 m und einer Schutzschicht 4 (außen) mit einem feuchtevariablen S_{d}-Wert kommt es dagegen für die Klimaregion "Miami/USA" nicht nur zu einem sehr hohen Wassergehalt der inneren Glaswolleschicht 5c, sondern auch zu einem Anstieg des Gesamtwassergehaltes der Konstruktion, was höchst gefährlich ist. Die gleiche S_{d}-Wert-Kombination führt für die Klimaregion "Holzkirchen/Deutschland" dagegen zu unbedenklichen Feuchtegehalten. Im Ergebnis ist es lediglich durch eine bestimmte Variation/Kombination der S_{d}-Werte der an die Wärmedämmung angrenzenden Materialien möglich, eine schadensfreie Konstruktion zu erreichen. Im Umkehrschluss birgt eine fehlerhafte Materialauswahl bzw. eine falsche Einbausituation ein hohes Schadensrisiko.

Erschwerend kommt hinzu, dass mit zunehmender Industrialisierung in tropischen Klimagebieten Klimaanlagen eingesetzt werden, die die Tauwasserproblematik verschärfen können. Dadurch erhöhen sich die anfallenden Wassermengen z.T. um mehr als das Doppelte, was zum Versagen der Konstruktion durch Feuchteackumulation führen kann. Im Stand der Technik besteht daher die allgemeine Auffassung, dass unterschiedliche Schutzschichten/Materialien rauminnenseitig und außenseitig als Witterungsschutz verwendet werden müssen. Aus dem Stand der Technik ist keine Schutzschicht bekannt, die sich weltweit in unterschiedlichsten Klimaregionen einsetzen lässt. Auch ist aus dem Stand der Technik keine Kombination einer feuchtevariablen Dampfbremse innen mit einer diffusionsoffenen Dach- bzw. Fassadenbahn außen bekannt, die sich weltweit bzw. klimaunabhängig einsetzen lässt.

Die DE 10 2006 009 260 A1 offenbart eine gedämmte Gebäudekonstruktion der eingangs genannten Art mit einer zu einer Rolle aufgewickelten Mineralwollbahn. Auf mindestens einer Hauptfläche der Mineralwollbahn ist eine als Schneidhilfe dienende Markierung vorgesehen. Darüber hinaus wird auf mindestens einer der beiden Hauptflächen der Mineralwollbahn eine Dampfsperr- oder Dampfbremsfolie vollflächig aufgebracht.

Die WO 2006/002440 A2 betrifft eine Dämmplatte, wobei ein Aerogelmaterial zur Wärmedämmung sandwichartig zwischen zwei Lagen aus einem wasserdichten und wasserdampfdurchlässigen Material angeordnet ist.

Die FR 2 997 649 A1 offenbart eine Schutzschicht, die aus einer Mischung aus einem Copolyamid einerseits und einem Ethylen-Vinyl-Alkohol-Copolymer andererseits besteht. Bei einer relativen Feuchte von 25% beträgt der S_{d}-Wert dieser bekannten Schutzschicht weniger als 20 m.

Darüber hinaus geht aus der FR 2 997 649 A1 eine feuchtevariable Schutzschicht hervor, die aus einer mittleren Lage aus Ethylen-Vinyl-Alkohol besteht, die sandwichartig zwischen zwei Lagen aus Polyamid angeordnet ist.

Aus der WO 02/070251 A1 ist eine Verwendung von lonomeren zur Abdichtung von Dämmstoffen bekannt. Die dort vorgeschlagenen Materialien werden dabei zur Herstellung feuchtevariabler Schutzfolien eingesetzt.

Aus der DE 297 00 987 U1 geht eine diffusionsoffene und wasserdichte Dachunterspannbahn hervor, die mindestens einen dreilagigen Verbund mit einer äußeren Vliesschicht auf Basis von thermoplastischen Kunststoffen und einer inneren Folienschicht aufweist.

Die US 2011/0197530 A1 offenbart eine Dämmkonstruktion mit den Merkmalen des Oberbegriffs des Anspruchs 1 und mit einem Schaumkern, wobei an beiden Flachseiten des Kerns eine wasserdampfdurchlässige Schicht angeordnet ist.

Die US 2007/0015424 A1 offenbart eine Konstruktion, bei der auf einem Dämmsubstrat eine von der Umgebungsfeuchte abhängige Schutzschicht aufgebracht ist.

Aus der US 2009/0202852 A1 geht ein Material hervor, das eine von der Umgebungsfeuchte abhängige wasserdampfdiffusionsäquivalente Luftschichtdicke aufweist.

Die EP 2 692 959 A1 betrifft ein Folienband zum Abdichten von Fugen zwischen zusammengefügten Bauelementen im Hausbau.

Aufgabe der vorliegenden Erfindung ist es, eine gedämmte Gebäudekonstruktion der eingangs genannten Art zur Verfügung zu stellen, die verbesserte Eigenschaften zur Verhinderung von Beschädigungen der in der Gebäudekonstruktion verwendeten Baumaterialien durch Feuchtigkeit aufweist, wobei gleichzeitig ein einfacher Aufbau der Gebäudekonstruktion gewährleistet und/oder die Handhabbarkeit der gedämmten Gebäudekonstruktion, insbesondere der Wärmedämmschicht, verbessert werden soll. Insbesondere soll sich die Gebäudekonstruktion in vielen unterschiedlichen Klimaten einsetzen lassen, ohne dass ein Versagen der Konstruktion durch Feuchteakkumulation zu befürchten ist.

Die vorgenannte Aufgabe wird durch eine Gebäudekonstruktion mit den Merkmalen des Patentanspruchs 1 gelöst. Vorteilhafte Ausgestaltungen der Erfindung sind Gegenstand der Unteransprüche.

Bei einer gedämmten Gebäudekonstruktion ist vorgesehen, dass die wasserdampfdiffusionsäquivalenten Luftschichtdicken S_{d} beider Schutzschichten im Bereich einer relativen (Luft-)Feuchte der die Schutzschicht umgebenden Atmosphäre von 0 % bis 25 % und/oder im Bereich einer relativen Feuchte der die Schutzschicht umgebenden Atmosphäre von 80 % bis 100 %, vorzugsweise von 85 % bis 100 %, weniger als 20 %, vorzugsweise weniger als 10 %, voneinander abweichen. Die Abweichung zwischen den S_{d}-Werten beider Schutzschichten kann in den vorgenannten Bereichen auch weniger als 5 % betragen. Bei der erfindungsgemäßen Gebäudekonstruktion ist auf der Außenseite und auf der Innenseite der Wärmedämmschicht jeweils eine Schutzschicht vorgesehen, wobei die Schutzschichten eine im Wesentlichen gleiche S_{d}-Werte-Charakteristik aufweisen. Die Wärmedämmschicht muss nicht homogen ausgebildet sein. Der Begriff "S_{d}-Werte-Charakteristik" betrifft hierbei die Abhängigkeit der wasserdampfdiffusionsäquivalenten Luftschichtdicke S_{d} der Schutzschicht von der relativen Feuchte der die Schutzschicht umgebenden Atmosphäre. Die erfindungsgemäße Gebäudekonstruktion lässt sich nahezu weltweit bzw. klimaunabhängig einsetzen, ohne dass Beschädigungen der Konstruktion bis hin zum Versagen der Konstruktion durch Feuchteakkumulation zu befürchten sind.

Hinzuweisen ist der Vollständigkeit halber darauf, dass der S_{d}-Wert die wasserdampfdiffusionsäquivalente Luftschichtdicke beschreibt, bei der es sich um ein bauphysikalisches Maß für den Wasserdampfdiffusionswiderstand eines Bauteils oder einer Bauteilschicht handelt. Der S_{d}-Wert wird in der Einheit [m] angegeben und setzt sich physikalisch als Produkt aus der dimensionslosen Werkstoffkonstante Wasserdampfdiffusionswiderstandszahl µ des betreffenden Baustoffes bzw. Materials multipliziert mit der Bauteilschichtdicke "S" in der Einheit [m] zusammen.

Erfindungsgemäß ist vorgesehen, gleich ausgebildete bzw. dieselben Schutzschichten rauminnenseitig und außenseitig an der Wärmedämmschicht vorzusehen. Dies führt zu einem einfachen Aufbau der Konstruktion und gewährleistet, dass sich die erfindungsgemäße Gebäudekonstruktion in nahezu allen Klimaten vorteilhaft einsetzen lässt.

Die Sperrwerte der erfindungsgemäß vorgesehenen Schutzschichten sind so optimiert, dass die Schutzschichten außen und/oder innen von Wärmedämmschichten eingesetzt werden können und hierbei rauminnenseitig die Wasserdampfdiffusion behindern bzw. vermeiden und an der Außenseite der Wärmedämmung eine sommerliche Austrocknung ermöglichen bzw. umgekehrt in Abhängigkeit von den klimatischen Verhältnissen. Durch Verwendung entsprechend ausgebildeter Schutzschichten sowohl rauminnenseitig als auch als äußerer Witterungsschutz können für nahezu alle Klimate Konstruktionen erstellt werden, in denen es lediglich zur Bildung von unbedenklichen Tauwassermengen kommen kann.

Die Prüfung der Wasserdampfdurchlässigkeit und die Messung der S_{d}-Werte erfolgt gemäß DIN EN ISO 12572 bzw. DIN EN 1931 in Abhängigkeit vom Luftfeuchtebereich. Das feuchteadaptive Verhalten des Materials der Schutzschicht kann durch ab- oder adsorptive Prozesse, Quellung, andere physikalische Prozesse und/oder durch chemische Reaktionen bedingt und muss reversibel sein.

Eine Schutzschicht besteht zumindest zum Teil aus einem Material und/oder weist ein Material auf, das bei einer relativen Feuchte der die Schutzschicht umgebenden Atmosphäre im Bereich bis 25 % eine wasserdampfdiffusionsäquivalente Luftschichtdicke S_{d} von größer oder gleich 10 m und/oder bei einer relativen Feuchte der die Schutzschicht umgebenden Atmosphäre im Bereich von mehr als 90 % einen S_{d}-Wert von kleiner oder gleich 0,4 m aufweist.

Erfindungsgemäß wird eine Schicht als feuchtevariabel bezeichnet, wenn sich der S_{d}-Wert der Schicht mit zunehmender oder abnehmender Feuchte der die Schicht umgebenden Luft derart ändert, dass sich insgesamt ein anderes bauphysikalisches Verhalten ergibt als bei konstantem S_{d}-Wert. Dieser Vorgang muss reversibel sein. Die Veränderung des bauphysikalischen Verhaltens muss dabei von einem stärker diffusionshemmenden zu einem stärker diffusionsoffenen Verhalten und umgekehrt stattfinden. Grundsätzlich steigt der S_{d}-Wert mit abnehmender Feuchte bzw. sinkt mit zunehmender Feuchte. Die S_{d}-Werte-Kurve über die Luftfeuchte ist hierbei nicht linear, weist wenigstens drei Kurvenabschnitte auf und enthält ein oder zwei Wendepunkte. Der absolute Wendepunkt, d.h. der Übergang zwischen diffusionshemmendem und diffusionsoffenem Verhalten liegt zwischen 50 und 90 % relativer Luftfeuchte. Über den gesamten Feuchtewertebereich kann der S_{d}-Wert zwischen 0,05 und 150 m betragen.

Die Schutzschicht zeichnet sich vorzugsweise dadurch aus, dass der S_{d}-Wert bei einer relativen Feuchte von 90 % zwischen 0,05 und 0,4 m beträgt, wobei der S_{d}-Wert vorzugsweise möglichst klein ist. Dabei sind bevorzugt Werte kleiner 0,1 m, insbesondere kleiner 0,09 m vorgesehen.

Bei einer relativen Feuchte von 80 % beträgt der S_{d}-Wert der Schutzschicht vorzugsweise 0,051 bis 150 m, ist jedoch stets größer als bei einer relativen Feuchte von 90 % und kleiner als bei einer relativen Feuchte von 50 %.

Bei einer relativen Feuchte von 65,5 % sollte der der S_{d}-Wert zwischen 4 bis 20 m, bevorzugt zwischen 5 bis 15 m liegen, aber in jedem Falle größer sein als bei einer relativen Feuchte von 80 % und kleiner als bei einer relativen Feuchte von 50 %.

Bei einer relativen Feuchte von 50 % kann der S_{d}-Wert vorzugsweise zwischen 5 und 150 m betragen, ist jedoch stets größer als bei einer relativen Feuchte von 80 % und kleiner als bei einer relativen Feuchte von 25 %.

Bei einer relativen Feuchte von 37,5 % liegt erfindungsgemäß der S_{d}-Wert zwischen 20 und 90 m, insbesondere zwischen 30 und 80 m, wobei er stets größer ist als der der S_{d}-Wert bei einer relativen Feuchte von 50 % und kleiner als bei einer relativen Feuchte von 25 %.

Bei einer relativen Feuchte von 25 % kann der S_{d}-Wert der Schutzschicht zwischen 10 und 150 m betragen, ist jedoch stets größer als bei einer relativen Feuchte von 50 %. Bevorzugt liegt der der S_{d}-Wert bei einer relativen Feuchte von 25 % zwischen 40 und 90 m.

Bei einer alternativen Ausführungsform können bereits geringere S_{d}-Werte bei einer relativen Feuchte von 25 % vorgesehen sein. Der S_{d}-Wert kann hierbei zwischen 10 und 30 m liegen. Anschließend nimmt der S_{d}-Wert kontinuierlich ab und liegt beispielsweise bei einer relativen Feuchte von 37,5 % zwischen 10 und 30 m, ist aber kleiner als bei einer relativen Feuchte von 25 %. Bei einer relativen Feuchte von 65,5 % liegt der S_{d}-Wert bevorzugt unter 10 m, während er bei einer relativen Feuchte von 80 % bevorzugt unter 0,1 m liegt. Bei einer relativen Feuchte von 90 % liegt der S_{d}-Wert ebenfalls unter 0,1 m, ist aber noch geringer als bei 80 %. Bei allen Ausführungsformen ist es so, dass mit zunehmender relativer Luftfeuchte der S_{d}-Wert stets abnimmt.

Im Übrigen ist darauf hinzuweisen, dass in den vorgenannten Intervallen der S_{d}-Werte bei den einzelnen Werten der relativen Feuchte alle Zwischenintervalle und auch alle Einzelwerte als erfindungswesentlich offenbart anzusehen sind, auch wenn diese im Einzelnen nicht angegeben sind.

Es versteht sich im Übrigen, dass die für unterschiedliche Luftfeuchten oben genannten S_{d}-Wertebereiche nicht in jedem Fall kumulativ bei der Schutzschicht erfüllt sein müssen. Alle Zwischenwerte der vorgenannten S_{d}-Wertebereiche sind hiermit als offenbart anzusehen.

Wesentlich ist, dass die Schutzschicht bei einer relativen Feuchte der die Schutzschicht umgebenden Atmosphäre im Bereich von 0 % bis 25 % einen S_{d}-Wert von größer 10 m und bei einer relativen Feuchte im Bereich von 90 % bis 100 % einen S_{d}-Wert von kleiner 0,4 m aufweist.

Beispielsweise sind folgende Kombinationen von S_{d}-Wertebereichen bei den betrachteten Luftfeuchten als erfindungsgemäß anzusehen:

| Luftfeuchte [%] | 25 | 50 | 80 | 90 |
|---|---|---|---|---|
| S_{d}-Wert [m] | 10 | 5 | 0,11 | 0,05 |
| S_{d}-Wert [m] | 10 | 8,8 | 0,051 | 0,05 |
| S_{d}-Wert [m] | 10 | 9,999 | 9,998 | 0,4 |

Im Bereich einer relativen Feuchte von weniger als 25 % liegt der S_{d}-Wert der Schutzschicht vorzugsweise unterhalb des S_{d}-Wertebereiches, der oben für eine relative Luftfeuchte von 25 % genannt ist. Mit anderen Worten beträgt der S_{d}-Wert im Bereich einer relativen Luftfeuchte von weniger als 25 % mehr als 10 m bis mehr als 150 m.

In Zusammenhang mit der Erfindung umfangreich durchgeführte hygrothermische Simulationen zur Beurteilung der Feuchtesicherheit von gedämmten Baukonstruktionen, die mit Hilfe des Verfahrens zur Berechnung des instationären Wärme- und Feuchtetransports in Bauteilen WUFI® 5.2 durchgeführt worden sind, und auch umfangreich im Rahmen der Erfindung durchgeführte Versuche haben gezeigt, dass Schutzschichten mit den zuvor beschriebenen Wasserdampf-Diffusionseigenschaften deutlich verbesserte Eigenschaften zur Verhinderung von Beschädigungen der in einer gedämmten Gebäudekonstruktion verwendeten Baumaterialien durch Feuchtigkeit aufweisen. Insbesondere ist es unter Verwendung der Schutzschichten möglich, eine Bauweise zu entwickeln, welche unabhängig von klimatischen Bedingungen eine Schadensfreiheit mit hohem Austrocknungspotential in gedämmten Dach- und Wandkonstruktionen zulässt. Hierbei wird der Grundgedanke berücksichtigt, dass an der Stelle der Konstruktion, auf der vornehmlich mit Feuchteeintritt zu rechnen ist, hohe S_{d}-Werte und an der Stelle, auf der die Feuchte austreten soll, niedrige S_{d}-Werte von Vorteil sind. Die erfindungsgemäße gedämmte Gebäudekonstruktion weist dementsprechend auf einer Außenseite der Wärmedämmschicht und auf einer dem Gebäudeinneren zugewandten Innenseite der Wärmedämmschicht jeweils wenigstens eine geeignete feuchtevariable Schutzschicht der zuvor beschriebenen Art auf. Weiter vorzugsweise ist jeweils eine Schutzschicht gebäudeinnenseitig und gebäudeaußenseitig unmittelbar an der Wärmedämmschicht angeordnet.

Ein Merkmal der Schutzschicht ist vorzugsweise, dass das diffusionshemmende Material aus energetischen und Holzschutzgründen eine Luftdichtheitsschicht bilden kann. Die Luftdichtheit mehrerer Schutzschichten untereinander kann mittels Selbstklebestreifen, Verschweißen, geeigneter Klebebänder oder geeigneter Klebemassen hergestellt werden. Eine Luftdichtheit ist notwendig, aber lediglich der gesamten Schutzschicht. Bei mehrschichtigem Aufbau müssen nicht alle Schichten jeweils luftdicht ausgebildet sein. An Gebäudeteile lässt sich die Schutzschicht mit geeigneten Klebemassen und/oder Kompribändern mit Lattenfixierung anbinden.

Die erfindungsgemäße Schutzschicht kann als Platte und/oder Flächengebilde, insbesondere als (flexible) Folie bzw. Membran und/oder als Beschichtung eines Trägermaterials, weiter insbesondere als Streich- und/oder als Sprühbeschichtung eines Trägermaterials, ausgebildet sein und/oder ein solches Flächengebilde aufweisen. Die Folie kann als Polymerbeschichtung (einseitig oder beidseitig) auf ein Trägermaterial aufgebracht sein oder mit einem Trägermaterial einseitig oder beidseitig kaschiert sein, insbesondere wobei das Trägermaterial ein Gewebe oder ein Vlies sein kann. Zwischen der Folie und dem Trägermaterial kann eine Klebstoffschicht zur Verbesserung der Verbundhaftung vorgesehen sein. Das Material kann bei der erfindungsgemäßen Schutzschicht auch eine haftklebrige Komponente zur Verbesserung der Verbundhaftung zwischen der Folie und einem Trägermaterial aufweisen. Die Schutzschicht kann mit Selbstklebestreifen oder mit einer vollflächigen Klebeschicht versehen sein.

Die Ausgangsstoffe zur Herstellung der Schutzschicht können in Form von Kunststoffgranulaten oder -dispersonen/-emulsionen und/oder Pulvern eingesetzt werden. Die Herstellung kann mittels Gießverfahren, Koagulation, Blasfolien- bzw. Folienextrusion erfolgen. Einzelne Schichten können kalandriert, laminiert, mittels Wärme oder Klebeschichten verbunden werden. Weiterhin ist Tauchen, Spritzen, Sprühen, Rakeln im Falle von flüssigen Komponenten möglich. Eine anschließende Wärmefixation oder Verstreckung oder Hydrophobierung eines Zwischenproduktes kann zur Herstellung der Schutzschichten notwendig sein.

Die erfindungsgemäße Schutzschicht weist vorzugsweise eine Schichtdicke von 10 µm bis 3 mm, weiter vorzugsweise von 20 µm bis 2 mm, besonders bevorzugt von 50 µm bis 1 mm, auf.

Das Flächengewicht der Schutzschicht kann zwischen 20 g/m² und 700 g/m², vorzugweise zwischen 50 g/m² und 270 g/m², betragen.

Das diffusionshemmende Material kann ein Polyamid (PA), insbesondere PA 6, PA 3, und/oder ein Polyamid-Copolymer aufweisen und/oder aus Polyamid, insbesondere PA 6, PA 3, und/oder einem Polyamid-Copolymer, als Ausgangsmaterial und ggf. weiteren Komponenten erhältlich sein und/oder bestehen.

Um die geforderten Eigenschaften in Bezug auf den WasserdampfDiffusionswiderstand zu erfüllen, kann das Material auch ein lonomer aufweisen und/oder aus einem lonomer als Ausgangsmaterial und ggf. weiteren Komponenten erhältlich sein und/oder bestehen. Auch ist es möglich, dass das Material ein Ethylen-Vinyl-Alkohol-Homo- oder Copolymer (EVAL) aufweist und/oder aus einem solchen erhältlich ist und/oder besteht.

Bei einem geeigneten feuchtevariablen Material kann es sich auch um Polyurethan (PU), insbesondere um ein thermoplastisches Polyurethan (TPU), handeln. Vorzugsweise kann ein auf Basis einer Kombination und/oder Reaktion von aliphatischen oder aromatischen Diisocyanaten mit Polyester-, Polyether-, Polyetherester-, Polycaprolactam- oder Polycarbonatdiolen erhältliches Polyurethan eingesetzt werden. Das Material kann als Folie ausgebildet sein und/oder eine Folie aufweisen, die auf Polyurethanbasis hergestellt ist und/oder aus Polyurethan besteht und/oder Polyurethan aufweist. Insbesondere kann eine Folie eingesetzt werden, die aus thermoplastischem Polyurethan hergestellt ist und/oder aus einem thermoplastischen Polyurethan besteht und/oder ein thermoplastisches Polyurethan aufweist. Das feuchtevariable Material kann auch zum Teil oder vollständig aus thermoplastischem Polyester-Elastomer (TPE-E), bekannt unter Handelsnamen wie Keyflex, Hytrel, Arnitel oder dergleichen, oder aus thermoplastischem Polyamid-Elastomer (TPE-A), bekannt beispielsweise unter dem Handelsnamen Pebax oder dergleichen, bestehen.

Alternativ ist es auch möglich, dass das diffusionshemmende Material ein Ethylen-Vinyl-Acetat (EVA) als Ausgangsmaterial aufweist und/oder aus einem Ethylen-Vinyl-Acetat und ggf. weiteren Komponenten erhältlich ist und/oder besteht.

Um die geforderten Eigenschaften der Schutzschicht in Bezug auf die den Wasserdampfdiffusionswiderstand zu erfüllen, kann eine Folie als Schutzschicht vorzugsweise aus einer Mischung eines Polyurethans mit einem Polymer mit Vinylalkohol als Monomeranteil und ggf. weiteren Komponenten erhältlich sein und/oder besteht aus einer solchen Mischung und/oder weist eine solche Mischung auf. Bei einem vinylalkoholhaltigem Polymer kann es sich beispielsweise um ein unter dem Handelsnamen EVAL erhältliches Polymer der Firma Kuraray handeln. EVAL-Harze bieten sehr gute Gas-Barriere-Eigenschaften und können mit konventioneller Fertigungsausrüstung einfach und kostengünstig verarbeitet werden. Harze haben einen Vinylalkoholgehalt von 52 Gew.-% bis 76 Gew.-%, vorzugsweise von 60 Gew.-% bis 70 Gew.-%, weiter vorzugsweise von 65 Gew.-% bis 68 Gew.-%. Es hat sich als zweckmäßig erwiesen, wenn der Polyurethananteil in der Mischung mehr als 50 Gew.-%, insbesondere mehr als 60 Gew.-%, weiter insbesondere mehr als 75 Gew.-%, beträgt, jeweils bezogen auf die Mischung.

Es versteht sich, dass das feuchtevariable Material auch aus einer Kombination und/oder Reaktion von wenigstens zwei der vorgenannten Ausgangsmaterialien erhältlich sein kann. Insbesondere kann das Material aus einer Kombination einer Komponente mit einem hohen Sperrwert und einer Komponente mit einem niedrigen Sperrwert, auch in Kombination mit weiteren Komponenten, bestehen. Durch Veränderung der Gewichtsanteile werden dabei die S_{d}-Werte/relative Luftfeuchte-Verhältnisse, aber auch andere Eigenschaften wie Härte oder Flexibilität, gezielt einstellbar.

Das feuchtevariable Material kann aktive oder passive Additive und/oder Füllstoffe enthalten. Als aktive Additive werden im Sinne der Erfindung solche verstanden, die Einfluss auf die Feuchtevariabilität des diffusionshemmenden Materials ausüben, indem sie beispielsweise Feuchte aufnehmen können. Beispielsweise kann als aktives Additiv eine pyrogene Kieselsäure, insbesondere eine unter dem Handelsnahmen AEROSIL® erhältliche Kieselsäure, vorgesehen sein. Passive Füllstoffe sind dagegen im Sinne der Erfindung solche, deren Eigenschaften feuchteunabhängig sind, wie beispielsweise Schichtsilikate. Als weitere Additive können Stabilisatoren oder Verarbeitungshilfsmittel eingesetzt werden.

Um die geforderten Eigenschaften in Bezug auf den WasserdampfDiffusionswiderstand weiter zu verbessern oder sicherzustellen, kann beispielsweise ein Polyurethan und/oder ein Ethylen-Vinyl-Alkohol-Polymer und/oder deren Mischung wenigstens einen Füllstoff als Zusatzstoff aufweisen, insbesondere ein Schichtsilikat, weiter insbesondere ein Nanoschichtsilikat. Schichtsilikate sind gasundurchlässige Plättchen. Sie bewirken aufgrund ihrer Ausrichtung im Kunststoff eine Barrierewirkung gegen Diffusion von Gasen, wie beispielsweise Wasserdampf. Idealerweise sind die Nanoclays so ausgerichtet, dass sie einen höheren Sperrwert und damit einen höheren S_{d}-Wert erzeugen können als das Matrixpolymer. Verwendet man ein Matrixpolymer, was bei erhöhter Feuchte quellen kann, kann das zum Aufrichten der Schichtsilikatplättchen dergestalt führen, dass durch die Erhöhung der Abstände zwischen den Schichten ein beschleunigter Wasserdampftransport an den Schichtgrenzen möglich ist und somit ein sehr geringer S_{d}-Wert erreicht wird.

Eine besonders hohe Sicherheit gegen ein ungewolltes Eindringen von Feuchtigkeit in die Konstruktion ist dann gegeben, wenn eine Änderung der relativen Feuchte der die Schutzschicht umgebenden Atmosphäre zu einer zeitversetzten Änderung der wasserdampfdiffusionsäquivalenten Luftschichtdicke S_{d} des Materials führt. Bei verzögerter Reaktion ist die Schutzschicht dann offen bzw. weist eine erhöhte Permeabilität für Wasserdampf auf, wenn die kurzfristige Feuchteerhöhung bereits wieder abgeklungen ist. Ein ungewollter Eintritt von Feuchte in die gedämmte Gebäudekonstruktion ist damit weitgehend ausgeschlossen. Ist Feuchtigkeit dagegen permanent im Inneren des Gebäudes und/oder der Gebäudekonstruktion vorhanden, kann die Feuchtigkeit entweichen, sobald die Folie offen ist.

Vorzugsweise ist das feuchtevariable Material derart ausgebildet, dass eine Erhöhung der relativen Feuchte beispielsweise von einem Bereich zwischen 0 % bis 25 % auf einen Bereich von 80 % bis 100 % zu einer Erniedrigung der wasserdampfdiffusionsäquivalenten Luftschichtdicke S_{d} des Materials beispielsweise auf einen S_{d}-Wert von kleiner 5 m, vorzugsweise kleiner 1 m, weiter vorzugsweise kleiner 0,1 m, nach 2 h bis 96 h, insbesondere nach 12 h bis 72 h, weiter insbesondere nach 24 h bis 28 h, führt. Da die Erniedrigung des S_{d}-Wertes zeitversetzt zur Erhöhung der Feuchte auftritt, kann eine kurzzeitige Erhöhung der Feuchte, wie sie bei der Gebäudenutzung, beispielsweise beim Kochen, auftreten kann oder auch nach einem Regenschauer, nicht dazu führen, dass zu viel Wasser in die Konstruktion eindringt. Dauerhaft anliegende Feuchte, wie sie im Inneren der Konstruktion auftreten kann, kann dagegen austreten.

Nachfolgend soll die Erfindung an Beispielen erläutert werden.

Die nachfolgend beschriebenen hygrothermischen Simulationen wurden mit dem Simulationsprogramm WUFI® 5.2 durchgeführt. Die Berechnungen gehen grundsätzlich von den ungünstigsten Bedingungen aus. Folgende Randbedingungen wurden betrachtet:
- äußere Schicht ist vollflächig (Bedachung bzw. Fassadenbekleidung);
- die Hinterlüftungsebene hat Feuchtespeicherfunktion und es wird mit einer Luft- und Feuchtequelle gerechnet;
- die Dachneigung beträgt 35°, es wird von rotem Dachziegel mit Regenanhaftung entsprechend Neigung gerechnet;
- bei Fassaden wird Holzbekleidung angenommen;
- die Gebäude werden in Richtung der geringsten Strahlungsenergiemenge ausgerichtet, um den ungünstigsten Fall zu simulieren;
- es wurde vom 1. September 2013 bis 1. September 2018 in Zwei-Stunden-Schritten gerechnet;
- falls bei den Klimadaten mehrere Datensätze hinterlegt waren, wurde der ungünstigste Fall angenommen;
- an der Innenseite wurde eine Installationsebene von 25 mm und eine Gipskartonplatte angeordnet;
- die Ausgangsfeuchte über das Bauteil wurde auf konstant 80 % festgelegt;
- das Innenklima wurde abhängig vom Außenklima nach EN 15026 mit hoher Feuchtelast kalkuliert.

### Beispiel 1

Auf der Grundlage der in Fig. 1 gezeigten Standard-Steildachkonstruktion 1 mit dem in Fig. 2 gezeigten Schichtaufbau und den gezeigten Schichtdicken wurden hygrothermische Simulationen mit Hilfe des oben erwähnten Verfahrens zur Berechnung des instationären Wärme- und Feuchtetransports in Bauteilen WUFI® 5.2 durchgeführt. Dabei wurden unterschiedliche Klimazonen betrachtet.

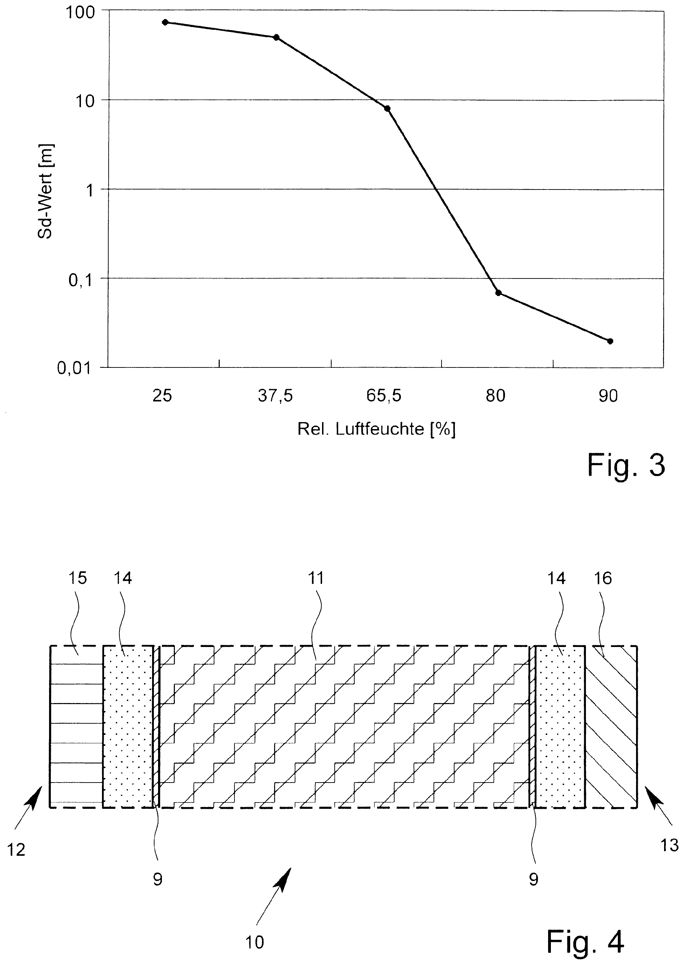

Bei der Simulation wurde jedoch davon ausgegangen, dass die Steildachkonstruktion 1 außen und innen beispielhaft mit einer feuchtevariablen Folie bzw. Membran als Schutzschicht 9 (vgl. Fig. 4) geschützt wird, deren S_{d}-Wert bei 0,05 m im feuchten Bereich bei einer relativen Luftfeuchtigkeit von mehr als 80 % und mehr als 20 m im trockenen Bereich bei einer relativen Luftfeuchtigkeit von weniger als 25 % beträgt. Der S_{d}-Wert-Verlauf über die relativen Luftfeuchtigkeiten der Folie, der bei der Simulation berücksichtigt wurde, ist in Fig. 3 schematisch dargestellt. Es wurden wiederum eine äußere Glaswoll-Grenzschicht 5a und eine innere Glaswoll-Grenzschicht 5c jeweils angrenzend an die Schutzschichten 9 (feuchtevariable Folien) betrachtet, bei einer Dicke der Glaswoll-Grenzschichten 5a, 5c von jeweils 1 mm. Die durchgeführten Simulationen führten zu folgenden Wassermengen in den Glaswoll-Grenzschichten 5a, 5c:

| Klimaregion | Klimatyp nach Neef | mittlere | | Wassermenge Glaswolle [g/m²] | |
|---|---|---|---|---|---|
| | | Temperatur [°C] | Luftfeuchte [%] | innen | außen |
| Holzkirchen | Ubergangsklima | 6,8 (-20b32) | 81 | 3 | 19 |
| Miami/USA | Feuchtes Passatklima | 25 (6b34) | 71 | 6 | 8 |
| Malaga/Spanien | Winterregenklima der Westseiten | 18 (0b40) | 64 | 3 | 9 |
| Karasjok/Norwegen | (Arktisch) (sub)polar | -3,1 (-44b24) | 87 | 2 | 15 |
| Tokio/Japan | Subtropisches Ostseitenklima | 16 (-1b35) | 62 | 4 | 8 |
| Christchurch/Neuseeland | Seeklima der Westseiten | 11 (-6b34) | 75 | 3 | 12 |
| Santiago de Chile | | 14 (0b27) | 62 | 2 | 8 |
| Anchorage/Alaska/USA | | 0,8 (-30b24) | 71 | 2 | 15 |
| Honulu warm | Tropisches Wechselklima | 25 (16b32) | 65 | 3 | 9 |
| Las Vegas | Trockenes Passatklima | 20 (-8b46) | 25 | 3 | 5 |
| Minneapolis | Kühles Kontinentalklima | 6 (-32b35) | 72 | 4 | 14 |
| San Francisco | Winterregen der Wesseiten | 14 (2b38) | 71 | 2 | 13 |
| Salt Lake City/USA | Klima der Hochgebirge | 12 (-13b38) | 61 | 3 | 11 |
| Colorado Springs | Sommerwarmes Kontinentalklima | 8 (-25b33) | 57 | 4 | 13 |
| Atlantic City | ustseitenklima | 12 (-21b34) | 71 | 3 | 4 |

In den unterschiedlichsten Klimazonen der Erde wurden unkritische Feuchtegehalte an den Glaswolleschichten kalkuliert, die direkt an die erfindungsgemäßen Schutzschichten angrenzen, sowohl in feuchtheißem als auch in sehr kaltem Klima.

### Beispiel 2

Bei der hygrothermischen Simulation wurde eine typische Konstruktion einer Holzständerwerk-Wand mit hinterlüfteter Fassadenbekleidung aus Holz betrachtet. Für die Simulation wurde davon ausgegangen, dass zur Aussteifung der Konstruktion an der Außenseite der Dämmung eine Holzfaserdämmplatte vorgesehen ist, an deren Grenzschicht zur Schutzschicht ebenfalls die Wassergehalte für eine dünne Grenzschicht von 1 mm bestimmt wurden. Die Außenbekleidung besteht aus Holz. Die Konstruktion wurde vertikal berechnet.

Folgende Wassermengen wurden ermittelt:

| Klimaregion | Klimatyp nach Neef | mittlere | | Wassermenge Glaswolle [g/m²] | | Wassermenge Holzfaserdämmplatte [g/m²] |
|---|---|---|---|---|---|---|
| | | Temperatur [°C] | Luftfeuchte [%] | innen | außen | außen |
| Holzkirchen | Ubergangsklima | 6,8 (-20b32) | 81 | 2 | 1 | 30 |
| Miami/USA | Feuchtes Passatklima | 25 (6b34) | 71 | 2 | 1 | 27 |
| Malaga/Spanien | Winterregenklima der Westseiten | 18 (0b40) | 64 | 2 | 1 | 27 |
| Karasjok/Norwegen | (Arktisch) (sub)polar | -3,1 (-44b24) | 87 | 1 | 1 | 30 |
| Tokio/Japan | Subtropisches Ostseitenklima | 16 (-1b35) | 62 | 2 | 1 | 27 |
| Christchurch/Neuseeland | Seeklima der Westseiten | 11 (-6b34) | 75 | 2 | 1 | 27 |
| Santiago de Chile | | 14 (0b27) | 62 | 2 | 1 | 28 |
| Anchorage/Alaska/USA | | 0,8 (-30b24) | 71 | 1 | 1 | 29 |
| Honulu warm | Tropisches Wechselklima | 25 (16b32) | 65 | 2 | 1 | 27 |
| *Las Vegas* | *Trockenes Passatklima* | *20 (-8b46)* | *25* | *2* | 1 | 28 |
| *Minneapolis* | *kühles kontinentalklima* | *6 (-32b35)* | *72* | *2* | *1* | *32* |
| *San Francisco* | *Winterregen der Wesseiten* | *14 (2b38)* | *71* | *2* | 1 | *27* |
| *Salt Lake City*/*USA* | *Klima der Hochgebirge* | *12 (-13b38)* | *61* | 2 | *1* | *28* |
| *Colorado Springs* | *Sommerwarmes Kontinentalklima* | *8 (-25b33)* | *57* | *2* | *1* | *29* |

Die Wassermengen in der Holzfaserdämmung unterscheiden sich für die betrachteten Klimazonen nur unwesentlich. Sie entsprechen bei einer Dichte von 165 kg/m³ einem prozentualen Wassergehalt von 18,2 Ma.% maximal. Damit wird der Normbereich nicht verlassen und es wird eine bauphysikalisch sichere Konstruktion erreicht.

### Beispiel 3

Es wurden hygrothermische Simulationen mit Hilfe des oben erwähnten Verfahrens zur Berechnung des instationären Wärme- und Feuchtetransports in Bauteilen WUFI® 5.2 durchgeführt. Dabei wurde eine Steildachkonstruktion mit einem Klemmfilz als Dämmmaterial und Feuchtequellen betrachtet, deren Aufbau im Wesentlichen dem Aufbau der Steildachkonstruktion 1 aus Beispiel 1 entspricht. Auch hier wurden für die Simulationsrechnungen statt der Dampfbremsen 4, 6 aus Fig. 1 Schutzschichten 9 mit der S_{d}-Werte-Charakteristik vorgesehen.

Zusätzlich wurde im Simulationsprogramm berücksichtigt, dass Feuchtequellen unterhalb der äußeren Schutzschicht angeordnet sind. Damit wird der Fall simuliert, dass die Luftdichtheitsebene Leckagen aufweist. Im Übrigen erfolgte die Simulation wie in Beispiel 1.

| Klimaregion | Klimatyp nach Neef | mittlere | | Wassermenge Klemmfilz [g/m²] | |
|---|---|---|---|---|---|
| | | Temperatur [°C] | Luftfeuchte[%] | innen | außen |
| Holzkirchen | Ubergangsklima | 6,8 (-20b32) | 81 | 1 | 19 |
| Miami/USA | Feuchtes Passatklima | 25 (6b34) | 71 | 3 | 1 |
| Malaga/Spanien | Winterregenklima der Westseiten | 18 (0b40) | 64 | 1 | 1 |
| Karasjok/Norwegen | (Arktisch) (sub)polar | -3,1 (-44b24) | 87 | 1 | 35 |
| Tokio/Japan | Subtropisches Ostseitenklima | 16 (-1b35) | 62 | 1 | 1 |
| Christchurch/Neuseeland | Seeklima der Westseiten | 11 (-6b34) | 75 | 1 | 2 |
| Santiago de Chile | | 14 (0b27) | 62 | 1 | 1 |
| Anchorage/Alaska/USA | | 0,8 (-30b24) | 71 | 1 | 1 |
| Honulu warm | Tropisches Wechselklima | 25 (16b32) | 65 | 1 | 1 |
| *Las Vegas* | *Trockenes Passatklima* | *20 (-8b46)* | *25* | 1 | 1 |
| *Minneapolis* | *Kühles kontinentalklima* | *6 (-32b35)* | *72* | *2* | *8* |
| *San Francisco* | *Winterregen der Wesseiten* | *14 (2b38)* | *71* | 1 | 2 |
| *Salt Lake City*/*USA* | *Klima der Hochgebirge* | *12 (-13b38)* | *61* | *1* | *3* |
| *Colorado Springs* | *Sommerwarmes Kontinentalklima* | *8 (-25b33)* | *57* | *1* | *1* |
| *Atlantic City* | *Ostseitenklima* | *12 (-21b34)* | *71* | *1* | *10* |

Auch bei verändertem Dämm-Material ist kein schädlicher Tauwasserausfall zu erwarten.

Die in den Beispielen 1 bis 3 simulierten Konstruktionen lassen sich im Wesentlichen klimaunabhängig einsetzen und sind voll funktionsfähig.

Nachfolgend werden mögliche Herstellungen/Rezepturen einer geeigneten Schutzschicht beschrieben, wobei die oben beschriebenen Simulationen mit einer Schutzschicht entsprechend Rezeptur 2 erfolgten:

### Rezeptur 1:

Ein Compound, bestehend zu 60 Gew.-% aus einem Ether-TPU der Marke DESMOPAN der Firma Bayer und zu 40 Gew.-% aus einem Ethylen-Vinyl-Alkohol-Copolymer der Marke EVAL F der Firma Kuraray wurde zu einer Gießfolie als Schutzschicht mit einem Flächengewicht von 100 g/m² gegossen.

### Rezeptur 2:

Ein Vlies mit einem Flächengewicht von 70 g/m² wurde mit einem Compound, bestehend zu 65 Gew.-% aus einem Ether-Ester TPU der Marke DESMOPAN der Firma Bayer und zu 35 Gew.-% aus einem Ethylen-Vinyl-Akohol-Copolymer der Marke EVAL C der Firma Kuraray, mit einem Flächengewicht von 70 g/m² extrusionsbeschichtet.

### Rezeptur 3:

Eine 41 %-ige, wässrige Polyether-Polyurethan-Dispersion der Firma Alberdingk-Boley wurde mit 5 Gew.-% Nano-Schichtsilikat mittels Kugelmühle gefüllt, homogenisiert und auf ein PET-Vlies mit einem Flächengewicht von 70 g/m² gerakelt und mittels Wärmebehandlung vernetzt. Hierdurch wurde eine Folie mit einem Flächengewicht von 170 g/m² erhalten.

Alle genannten Wertebereiche umfassen jeweils sämtliche Zwischenwerte und - intervalle, auch wenn diese nicht ausdrücklich beziffert sind. Dennoch werden diese Zwischenwerte und -intervalle angesehen. Weitere Merkmale, Vorteile und Einzelheiten ergeben sich aus der nachfolgenden Beschreibung anhand von Fig. 4 der Zeichnung.

In Fig. 4 ist schematisch eine gedämmte Gebäudekonstruktion 10, bei der es sich um eine gedämmte Dach- und/oder Wandkonstruktion eines Gebäudes handeln kann, gezeigt. Die Gebäudekonstruktion 10 weist eine Wärmedämmschicht 11 auf. Auf einer Außenseite 12 der Wärmedämmschicht 11 und auf einer dem Gebäudeinneren zugewandten Innenseite 13 der Wärmedämmschicht 11 ist jeweils eine Folie als Schutzschicht 9 vorgesehen. Es sind auf beiden Seiten 12, 13 der Wärmedämmschicht 11 gleich bzw. identisch ausgebildete Schutzschichten 9 angeordnet. Jede Schutzschicht 9 besteht aus einer Folie oder Membran, die bei einer relativen Feuchte der die Schutzschicht 9 umgebenden Atmosphäre im Bereich von weniger als 25 % eine wasserdampfdiffusionsäquivalente Luftschichtdicke S_{d} von mehr als 10 m, vorzugsweise mehr als 20 m, weiter vorzugsweise mehr als 30 m, und bei einer relativen Feuchte der die Dampfbremse 9 umgebenden Atmosphäre im Bereich von mehr als 90 % eine wasserdampfdiffusionsäquivalente Luftschichtdicke S_{d} von weniger als 0,4 m aufweist. Damit sind die Sperrwerte der Schutzschicht 9 so optimiert, dass sie sowohl an der Außenseite 12 als auch an der Innenseite 13 der Wärmedämmschicht 11 eingesetzt werden kann. An die Schutzschichten 9 schließt sich auf jeder Seite 12, 13 der Wärmedämmschicht 11 jeweils eine Luftschicht 14 an. Den Abschluss nach außen bildet eine Verkleidung 15, bei der es sich bei einer Dachkonstruktion um eine durch Ziegel oder dergleichen gebildete Bedachung handeln kann. Es versteht sich, dass ein entsprechender Aufbau auch bei einer gedämmten Gebäudekonstruktion vorgesehen sein kann, bei der den Abschluss nach außen eine Fassadenbekleidung aus Stein, Holz oder einem anderen Fassadenwerkstoff bildet. Den Abschluss nach innen bildet eine Verkleidung 16, bei der es sich um eine Gipskartonwand oder eine andere übliche Innenbekleidung handeln kann.

Eine Gebäudekonstruktion kann grundsätzlich auch eine Schichtabfolge und/oder Schichtdicken aufweisen, die von der in Fig. 4 gezeigten Schichtabfolge und von den gezeigten Schichtdicken abweichen; lediglich die Position der erfindungsgemäßen Schutzschicht 9 direkt an der Außen- bzw. Innenseite des Wärmedämmpaketes steht fest.

### Bezugszeichenliste:

- 1: Dachkonstruktion
- 2: Dachziegel
- 3: Luftschicht
- 4: Dampfbremse
- 5a - c: Glaswolleschichten
- 6: Dampfbremse
- 7: Luftschicht
- 8: Gipskartonplatte
- 9: Schutzschicht
- 10: Gebäudekonstruktion
- 11: Wärmedämmschicht
- 12: Außenseite
- 13: Innenseite
- 14: Luftschicht
- 15: Verkleidung
- 16: Verkleidung

## Patentansprüche

1. Gedämmte Gebäudekonstruktion (10), insbesondere gedämmte Dach- und/oder Wandkonstruktion eines Gebäudes, aufweisend wenigstens eine Wärmedämmschicht (11), wobei auf einer Außenseite (12) der Wärmedämmschicht (11) und auf einer einem Gebäudeinneren des Gebäudes zugewandten Innenseite (13) der Wärmedämmschicht (11) jeweils wenigstens eine Schutzschicht (9) für die Wärmedämmschicht (11) vorgesehen ist, wobei die wasserdampfdiffusionsäquivalenten Luftschichtdicken S_{d} beider Schutzschichten (9) im Bereich einer relativen Feuchte von 0% bis 25% oder im Bereich einer relativen Feuchte von 80% bis 100% weniger als 20% voneinander abweichen und wobei die auf der Außenseite (12) und auf der Innenseite (13) der Wärmedämmschicht (11) vorgesehenen Schutzschichten (9) gleich ausgebildet sind,
**dadurch gekennzeichnet,**
**dass** die Schutzschichten (9) feuchtevariable ausgebildet sind und jeweils eine von der Umgebungsfeuchte abhängige wasserdampfdiffusionsäquivalente Luftschichtdicke S_{d} aufweisen, wobei das Material der Schutzschichten (9) aus einem Polyamid (PA), einem lonomer, einem Ethylen-Vinyl-Alkohol-Homo oder -Copolymer (EVAL), einem Polyurethan (PU) oder einem Ehtylen-Vinyl-Acetat (EVA) besteht und wobei der S_{d}-Wert der Schutzschichten (9) bei einer relativen Feuchte von 37,5% zwischen 20 m und 90 m liegt.

2. Gedämmte Gebäudekonstruktion (10) nach Anspruch 1, **dadurch gekennzeichnet, dass** der S_{d}-Wert bei einer relativen Feuchte von 37,5 % zwischen 30 m und 80 m liegt.

3. Gedämmte Gebäudekonstruktion (10) nach Anspruch 1 oder 2, **dadurch gekennzeichnet, dass** das Material als Flächengebilde, insbesondere als Folie und/oder als Beschichtung eines Trägermaterials, weiter insbesondere als Sprühbeschichtung eines Trägermaterials, ausgebildet ist und/oder ein solches Flächengebilde aufweist.

4. Gedämmte Gebäudekonstruktion (10) nach einem der vorhergehenden Ansprüche, **dadurch gekennzeichnet, dass** das Material aus einem PA 6, PA 3, und/oder einem Polyamid-Copolymer, als Ausgangsmaterial und gegebenenfalls weiteren Komponenten erhältlich ist und/oder aus einem PA 6, PA 3, und/oder einem Polyamid-Copolymer besteht.

5. Gedämmte Gebäudekonstruktion (10) nach einem der vorhergehenden Ansprüche, **dadurch gekennzeichnet, dass** das Material aus einem thermoplastischen Polyurethan als Ausgangsmaterial und gegebenenfalls weiteren Komponenten, erhältlich ist und/oder aus einem thermoplastischen Polyurethan besteht.

6. Gedämmte Gebäudekonstruktion (10) nach einem der vorhergehenden Ansprüche, **dadurch gekennzeichnet, dass** eine Änderung der relativen Feuchte der die Schutzschicht (9) umgebenden Atmosphäre zu einer zeitversetzten Änderung der wasserdampfdiffusionsäquivalenten Luftschichtdicke S_{d} des Materials führt, wobei, vorzugsweise, eine Erhöhung der relativen Feuchte zu einer Erniedrigung der wasserdampfdiffusionsäquivalenten Luftschichtdicke S_{d} des Materials nach 2 h bis 96 h, insbesondere nach 12 h bis 72 h, weiter insbesondere nach 24 h bis 48 h, führt.

## Claims

1. Insulated building structure (10), in particular insulated roof and/or wall structure of a building, comprising at least one thermal insulation layer (11), wherein at least one protective layer (9) for the thermal insulation layer (11) is provided respectively on an outer side (12) of the thermal insulation layer (11) and on an inner side (13) of the thermal insulation layer (11) facing the building interior of the building, wherein the water vapour diffusion-equivalent air layer thicknesses S_{d} of the two protective layers (9) deviate from one another by less than 20% in the range of relative humidity of 0% to 25% or in the range of relative humidity of 80% to 100%, and wherein the protective layers (9) provided on the outer side (12) and inner side (13) of the thermal insulation layer (11) are designed to be identical,
**characterised in that**
the protective layers (9) are designed in a moisture-variable manner, each having a water vapour diffusion-equivalent air layer thickness S_{d} that is dependent on the ambient humidity, wherein the material of the protective layers (9) consists of a polyamide (PA), an ionomer, an ethylene vinyl alcohol homopolymer or copolymer (EVAL), a polyurethane (PU) or an ethylene vinyl acetate (EVA) and wherein the S_{d} value of the protective layers (9) is between 20 m and 90 m with a relative humidity of 37.5%.

2. Insulated building structure (10) according to claim 1, **characterised in that** the S_{d} value is between 30 m and 80 m with a relative humidity of 37.5%.

3. Insulated building structure (10) according to claim 1 or claim 2, **characterised in that** the material is designed as a fabric, particularly as a film and/or as a coating of a substrate material, more particularly as a spray coating of a substrate material, and/or comprises such a fabric.

4. Insulated building structure (10) according to one of the preceding claims, **characterised in that** the material can be obtained from a PA 6, PA 3 and/or a polyamide copolymer, as a starting material, and other optional components, and/or consists of a PA 6, PA 3 and/or a polyamide copolymer.

5. Insulated building structure (10) according to one of the preceding claims, **characterised in that** the material can be obtained from a thermoplastic polyurethane, as a starting material, and other optional components, and/or consists of a thermoplastic polyurethane.

6. Insulated building structure (10) according to one of the preceding claims, **characterised in that** a change to the relative humidity in the atmosphere surrounding the protective layer (9) leads to a time-delayed change to the water vapour diffusion-equivalent air layer thickness S_{d} of the material, wherein an increase in the relative humidity preferably leads to a reduction in the water vapour diffusion-equivalent air layer thickness S_{d} of the material after 2 hours to 96 hours, particularly after 12 hours to 72 hours, more particularly after 24 hours to 48 hours.

## Revendications

1. Construction de bâtiment isolée (10), en particulier construction de toit et/ou de mur isolée d'un bâtiment, présentant au moins une couche d'isolation thermique (11), au moins une couche de protection (9) destinée à la couche d'isolation thermique (11) étant prévue tant sur une face extérieure (12) de la couche d'isolation thermique (11) que sur une face intérieure (13) de la couche d'isolation thermique (11), dirigée vers un intérieur du bâtiment, les épaisseurs de couche d'air S_{d} équivalentes à la diffusion de la vapeur d'eau des deux couches de protection (9) s'écartant de moins de 20 % l'une de l'autre dans la plage d'une humidité relative de 0 % à 25 % ou dans la plage d'une humidité relative de 80 % à 100 % et les couches de protection (9) prévues sur la face extérieure (12) et sur la face intérieure (13) de la couche d'isolation thermique (11) étant conçues identiques,
**caractérisée en ce**
**que** les couches de protection (9) sont conçues hygrovariables et présentent chacune une épaisseur de couche d'air S_{d}, équivalente à la diffusion de la vapeur d'eau, dépendant de l'humidité ambiante, le matériau des couches de protection (9) étant constitué d'un polyamide (PA), d'un ionomère, d'un homo- ou d'un copolymère éthylène-alcool vinylique (EVAL), d'un polyuréthanne (PU) ou d'un éthylène-acétate de vinyle (EVA) et la valeur S_{d} des couches de protection (9) étant comprise entre 20 m et 90 m pour une humidité relative de 37,5 %.

2. Construction de bâtiment isolée (10) selon la revendication 1, **caractérisée en ce que** la valeur S_{d} est comprise entre 30 m et 80 m pour une humidité relative de 37,5 %.

3. Construction de bâtiment isolée (10) selon la revendication 1 ou 2, **caractérisée en ce que** le matériau est conçu sous forme d'une structure bidimensionnelle, en particulier d'une feuille et/ou d'un revêtement sur un matériau support, plus particulièrement sous forme d'un revêtement par pulvérisation d'un matériau support et/ou présente une telle structure bidimensionnelle.

4. Construction de bâtiment isolée (10) selon l'une des revendications précédentes, **caractérisée en ce que** le matériau peut être obtenu à partir d'un PA 6, d'un PA 3 et/ou d'un copolymère de polyamide servant de matière de départ et éventuellement d'autres composants et/ou est constitué d'un PA 6, d'un PA 3 et/ou d'un copolymère de polyamide.

5. Construction de bâtiment isolée (10) selon l'une des revendications précédentes, **caractérisée en ce que** le matériau peut être obtenu à partir d'un polyuréthanne thermoplastique en tant que matière de départ et éventuellement d'autres composants et/ou est constitué d'un polyuréthanne thermoplastique.

6. Construction de bâtiment isolée (10) selon l'une des revendications précédentes, **caractérisée en ce qu'**une modification de l'humidité relative de l'atmosphère entourant la couche de protection (9) conduit à une modification décalée dans le temps de l'épaisseur de couche d'air S_{d} du matériau, équivalente à la diffusion de la vapeur d'eau, de préférence une augmentation de l'humidité relative conduisant à une diminution de l'épaisseur de couche d'air S_{d} du matériau, équivalente à la diffusion de la vapeur d'eau, après 2 h à 96 h, en particulier après 12 h à 72 h, plus particulièrement après 24 h à 48 h.
